# DEMANDE DE BREVET EUROPEEN

(11) **EP 0 527 120 A1**
(43) Date de publication de la demande: **10.02.1993**
(21) Numéro de dépôt: 92870119.2
(22) Date de dépôt: 06.08.1992
(51) Int. Cl.: G01B 3/56, G01B 5/24

(54) **Dispositif pour indiquer une fraction d'angle**

(71) Demandeur: Bouche, Jean, B-1040 Bruxelles (BE)
(72) Inventeur: Bouche, Jean, B-1040 Bruxelles (BE)
(74) Mandataire: Vanderperre, Robert

(57) **Abrégé**

Dispositif pour indiquer une fraction d'angle présentant deux branches latérales (1, 3) et une branche de mesure (2) pourvue d'une première rainure de guidage (15), les branches (1, 2, 3) étant reliées l'une à l'autre de manière articulée par des premiers moyens de liaison (24) et deux bras mobiles (4, 14) étant prévus, lesquels sont reliés de manière articulée à une extrémité (18) par des deuxièmes moyens de liaison (25). L'extrémité articulée (18) de chaque bras (4, 14) est déplaçable dans la première rainure de guidage (15) et les bras (4, 14) sont agencés de manière telle que les branches latérales (1, 3) peuvent être rabattues complètement.

## Description

Cette invention se rapporte à un dispositif pour indiquer une fraction d'angle présentant deux branches latérales et au moins une branche de mesure dans laquelle est prévue au moins une première rainure de guidage, les branches précitées étant reliées l'une à l'autre de manière articulée par des premiers moyens de liaison, deux bras mobiles étant en outre prévus lesquels sont reliés de manière articulée à une extrémité par des deuxièmes moyens de liaison.

Un tel dispositif est notamment utilisé lorsqu'il faut indiquer une fraction d'angle sur une pièce à usiner, par exemple en la marquant.

Jusqu'à présent, le problème a été résolu par l'utilisation d'un compas ou par le sciage ou le limage de la pièce à usiner jusqu'à ce que l'angle requis soit obtenu. Ceci présente cependant l'inconvénient que le nombre d'opérations pour atteindre l'angle requis est plutôt élevé et ceci prend du temps.

L'invention a pour but de remédier à cet inconvénient. A cette fin, il est prévu dans le dispositif suivant l'invention que l'extrémité articulée précitée des deux bras soit déplaçable dans la première rainure de guidage et que les bras soient agencés de manière telle que les branches latérales puissent être complètement rabattues.

Ce dispositif permet de réduire considérablement le nombre d'opérations pour l'obtention de l'indication d'une fraction d'angle, dans le cas présent un demi angle, à savoir de le réduire à deux. On peut donc travailler beaucoup plus vite. Cela vaut tant pour la mesure que pour le marquage d'une fraction d'angle.

Suivant un mode de réalisation avantageux d'un dispositif selon l'invention, les bras précités présentent une forme pliée vers l'extérieur par rapport à la branche de mesure.

Suivant un mode de réalisation particulièrement avantageux d'un dispositif selon l'invention, au moins une deuxième rainure de guidage est prévue à ladite extrémité articulée de la branche de mesure, la deuxième extrémité de chaque bras, qui est opposée à ladite extrémité articulée, étant déplaçable par des troisièmes moyens de liaison. Grâce à la mobilité, suivant chaque deuxième rainure de guidage, des deuxièmes extrémités des bras de liaison, des angles supérieurs à 180° peuvent être mesurés.

Avantageusement, chaque deuxième rainure de guidage précitée présente une forme courbée autour du point d'articulation, en particulier chaque deuxième rainure de guidage précitée est formée pratiquement par une paire de demi-cercles qui sont agencés symétriquement par rapport audit point d'articulation des branches.

Il est avantageux que chaque bras présente une courbure pointée vers l'extérieur l'une par rapport à l'autre, laquelle est agencée pour que ladite deuxième extrémité des bras parcoure pratiquement toute la distance entre les deux extrémités des deux deuxièmes rainures de guidage lorsque ladite extrémité articulée des bras parcourt entièrement les deuxièmes rainures de guidage. Ainsi, la deuxième extrémité de chaque bras peut contourner l'axe commun d'articulation des branches. Cet axe d'articulation ne constitue donc plus un obstacle au déplacement des bras et, par conséquent, les branches latérales peuvent être ouvertes complètement. Cela permet ainsi de mesurer un angle allant jusqu'à 360°.

Suivant un autre mode de réalisation avantageux du dispositif selon l'invention, au moins l'une des branches est pourvue d'un support.

Suivant un autre mode de réalisation avantageux encore du dispositif selon l'invention, une plaque est prévue à au moins une face de la branche de mesure pour l'isolation du mécanisme de guidage.

D'autres détails et avantages du dispositif suivant l'invention apparaîtront de la description ci-après d'exemples de réalisation illustrés à l'aide des dessins annexés.

Les mêmes chiffres de référence se rapportent à des éléments identiques ou analogues.

La figure 1 illustre une vue en écorché d'une première forme de réalisation du dispositif suivant l'invention dans une position de travail déterminée.
La figure 2 illustre une vue en coupe transversale du dispositif suivant l'invention en position rabattue.
Les figures 3 et 4 illustrent chacune une deuxième forme de réalisation du dispositif suivant l'invention dans deux positions de travail respectives.
Les figures 5 et 6 illustrent chacune une vue latérale du dispositif suivant l'invention dans deux positions de travail respectives.
La figure 7 illustre une vue en coupe transversale de la troisième forme de réalisation des figures 5 et 6.

L'invention se rapporte à un dispositif d'indication d'une fraction d'angle à utiliser pour la fabrication de cadres et de châssis, en construction navale et dans l'industrie du bâtiment, pour les charpentiers et les maçons, en particulier pour le marquage d'une fraction d'angle mesurée.

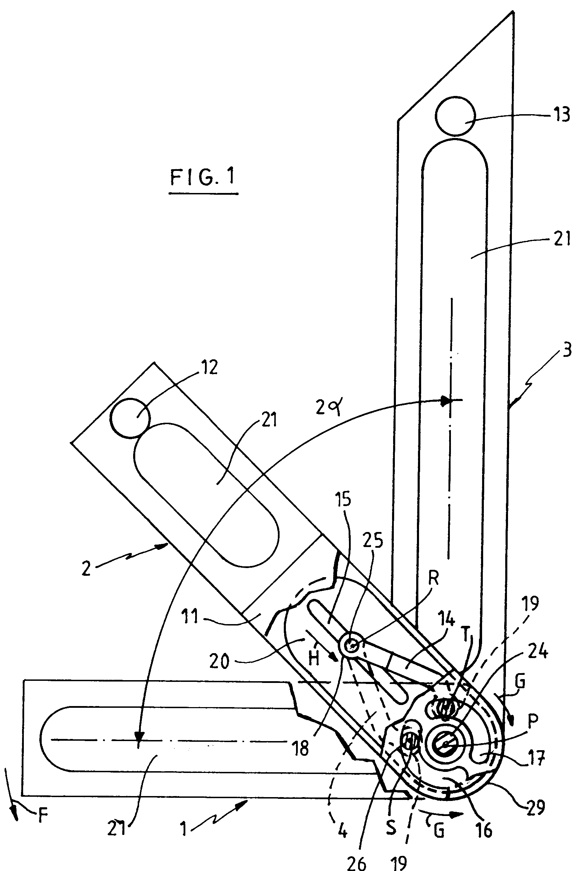

La figure 1 illustre une vue latérale d'un dispositif pour indiquer une fraction d'angle, en particulier d'un demi angle, partiellement ouvert. Le dispositif comprend deux branches latérales 1, 3 et une branche de mesure 2. Les branches latérales 1, 3 sont prévues pour être amenées, lors d'une opération de mesure ou de marquage, contre des limiteurs d'angle présentant un angle déterminé, imposé par exemple par une configuration de mur donnée.

La branche de mesure 2 sert à indiquer le demi angle sur une pièce à usiner qui doit cadrer avec la configuration de mur donnée.

Les trois branches 1, 2, 3 du dispositif suivant l'invention sont reliées l'une à l'autre de deux manières. D'une part, elles sont reliées toutes les trois directement, de manière articulée en un point d'articulation P. Cependant, la présence d'autres organes de liaison entre les trois branches empêche une articulation libre des trois branches l'une par rapport à l'autre. Chacune des branches latérales 1, 3 est reliée à la branche de mesure 2 par l'intermédiaire de bras intermédiaires respectifs 4, 14. Les deux bras 4, 14 sont reliés l'un à l'autre de manière articulée en un autre point d'articulation R, à une première extrémité 18 de chaque bras 4, 14 par l'intermédiaire de moyens de liaison 25, par exemple une broche d'articulation. Une fente 15 est prévue dans la branche de mesure 2 dans laquelle la broche d'articulation 25 peut effectuer un mouvement forcé, la broche d'articulation 25 étant prévue de manière saillante dans la fente 15. La fente 15 est, de préférence, linéaire et elle s'étend suivant la direction longitudinale de la branche de mesure 2.

Dans cette forme de réalisation du dispositif suivant l'invention, les deuxièmes extrémités 19 des bras 4, 14 sont agencées de manière déplaçable suivant des deuxièmes rainures de guidage 16, 17. Celles-ci sont agencées dans la branche de mesure 2 à hauteur de l'extrémité qui est reliée de manière articulée aux branches latérales 1, 3. Les deuxièmes extrémités 19 des bras 4, 14 suivent les deuxièmes rainures de guidage 16, 17 par exemple au moyen de broches de liaison qui sont fixées auxdites deuxièmes extrémités 19 des bras et qui font saillie vers les rainures de guidage 16, 17.

Les deux bras 4, 14 présentent une longueur pratiquement égale de sorte que la branche de mesure 2 est située sur la bissectrice de l'angle 2 α qui est formé entre les deux branches latérales 1, 3.

Par les diverses liaisons 25 et 26 entre les branches 1, 2, 3 et les bras 4, 14, ce dispositif peut être ouvert ou fermé. Lors du déploiement ou du repliement des branches latérales 1, 3, le point d'articulation R, qui est commun aux deux bras 4 et 14, subit un déplacement linéaire suivant la direction longitudinale de la branche de mesure 2. Du fait de la disposition des points de liaison PRST qui est symétrique par rapport à l'axe central de la branche de mesure 2, la branche de mesure 2 reste toujours sur la bissectrice de l'angle 2 α, quelle que soit la position des branches latérales 1, 3. Par conséquent, la branche de mesure 2 peut servir directement à l'indication du demi angle α qui est compris entre les branches latérales 1, 3 du dispositif.

En faisant un choix approprié de la forme des deuxièmes rainures de guidage 16, 17, on obtient la possibilité de déployer le dispositif suivant l'invention, en particulier les branches latérales, sur un angle qui est supérieur ou égal à 180°. Avantageusement, les deux deuxièmes rainures de guidage précitées 16, 17 présentent une forme courbée de convexité orientée vers l'extérieur l'une par rapport à l'autre. Comme représenté sur la figure 1, on choisit par exemple deux rainures de guidage 16, 17 qui présentent chacune pratiquement la forme d'un demi arc de cercle, les deux demi arcs de cercle faisant partie d'un même cercle et le centre de celui-ci étant situé dans ledit point d'articulation P. Ainsi les deuxièmes extrémités 19 des bras 4, 14 peuvent à présent contourner l'axe d'articulation en P, ce qui a pour effet que ce dernier ne constitue plus un obstacle au déploiement ultérieur des deux branches latérales 1, 3.

Afin de permettre un déplacement des deux deuxièmes extrémités 19 jusque derrière l'axe d'articulation en P par rapport au point d'articulation R, il est conféré aux bras 4, 14 une forme courbée, de convexité orientée extérieurement l'un par rapport à l'autre. Ainsi, un mouvement de demi cercle pratiquement complet peut être décrit par les deuxièmes extrémités 19 des bras 4, 14. Cela a pour conséquence que les deux branches latérales 1, 3 peuvent être complètement déployées suivant une direction indiquée par la flèche F.

Cela a pour effet qu'un angle allant jusqu'à 360° peut être divisé en deux grâce au dispositif suivant l'invention. Ainsi par exemple, comme représenté sur la figure 1, un angle de 90° peut être divisé en deux étant donné que les dimensions des deux bras 4, 14 sont pratiquement identiques. Lors du déploiement des branches latérales 1, 3, l'extrémité 19 des bras 4, 14, qui est orientée vers le point d'articulation P, se déplace le long des rainures de guidage circulaires 16, 17 suivant une direction indiquée par les flèches G sur la figure 1. Ledit déplacement se fait d'une extrémité à l'autre des deux rainures de guidage circulaires. Ledit déplacement suivant les flèches G donne lieu à un déplacement de la broche 25, qui est agencée dans le point d'articulation R, suivant la flèche H vers le point d'articulation P.

Afin de réduire l'usure de la broche 25, celle-ci présente par exemple une section carrée. De ce fait, la pression sur la broche est plus faible, et une durée de vie plus longue de la broche est ainsi obtenue. Un rivet peut également être utilisé ici.

Grâce à la symétrie mutuelle des rainures de guidage 16 et 17 par rapport à la rainure de guidage 15 et des bras 4, 14 par rapport à la première bissectrice de l'angle 2 α compris entre les deux branches latérales, la branche de mesure 2 conserve toujours sa position dans cette première bissectrice, quelle que soit la position des branches latérales. Il en résulte que la position de la branche de mesure indique de manière fidèle la moitié d'angle α.

Comme mentionné précédemment, la rainure de guidage 15 est prévue pour permettre le déplacement de la broche d'articulation 25 correspondant au point d'articulation R dans celle-ci. Il est avantageusement veillé ici à ce que la longueur de la rainure de guidage 15 soit au moins de telle dimension que les points extrêmes de celle-ci correspondent chacun aux points extrêmes des deux deuxièmes rainures de guidage 16, 17. La première rainure de guidage 15 peut cependant également être choisie plus grande et elle peut s'étendre par exemple sur pratiquement toute la longueur de la branche de mesure 2. Cela s'avère utile pour le marquage, sur la pièce à usiner, de la fraction d'angle mesurée, suivant la figure le demi angle mesuré. Dans ce cas, la première rainure de guidage 15 doit être creusée sur toute l'épaisseur de la branche de mesure 2, et cela au moins sur une partie de sa longueur.

Par ailleurs, un évidement 20 est avantageusement prévu à la surface de la branche de mesure 2, de manière à permettre un mouvement plus libre des bras 4, 14 dans celle-ci lors du déploiement ou du repliement des branches latérales 1, 3. Des évidements analogues 21 peuvent également être prévus dans les différentes branches 1, 2, 3. On obtient ainsi une économie de matériau ainsi qu'une réduction du poids du dispositif. Un autre avantage de ceci réside également dans le fait d'une meilleure prise sur les différentes branches et donc un usage plus maniable. Le cas échéant, les évidements 21 sont creux sur toute l'épaisseur des branches 1, 2, 3, ce qui a pour effet que l'économie de matériau et la réduction de poids deviennent encore plus importantes.

Outre une division par deux d'un angle donné, une autre division d'angle, telle que par exemple une division par trois ou quatre, pourrait également, dans le cadre de cette invention, être prévue. A cette fin, les dimensions respectives des bras 4, 14 et des deux deuxièmes rainures de guidage 16, 17 devraient être adaptées en conséquence.

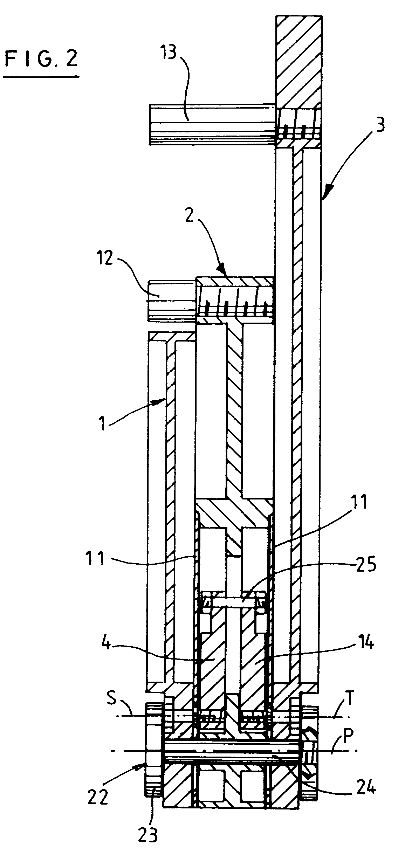

Ainsi qu'il ressort de la figure 2, un élément de liaison 22 est agencé dans le point d'articulation P de manière à serrer les trois branches 1, 2, 3 l'une contre l'autre à hauteur de leur point d'articulation commun P. L'élément de liaison 22 consiste par exemple en un écrou 23 et un axe 24, lesquels sont logés dans un alésage pratiqué en P. L'écrou 23 est avantageusement pourvu d'un creux ou d'une partie saillante de manière à permettre une meilleure prise sur l'écrou 23 lors du serrage de l'élément de liaison 22. Cela favorise en effet la maniabilité lorsque le dispositif doit être placé dans un angle inclus et que l'écrou 23 doit être serré ou desserré. A cette fin, un écrou dit à tête croisée peut être utilisé, par exemple. L'axe 24, par exemple une broche, relie les trois branches 1, 2, 3 l'une à l'autre et il peut être serré par l'écrou 23.

La figure 2 illustre une vue en coupe transversale, suivant un plan central et suivant la direction longitudinale du dispositif suivant l'invention en position repliée. Dans cet exemple, la branche de mesure 2 est agencée entre les branches latérales 1, 3. Cette disposition mutuelle des branches 1, 2, 3 procure un fonctionnement plus efficace des deux bras 4, 14. Cependant, une autre disposition dans laquelle la branche de mesure 2 est extérieure aux branches latérales 1, 3 tombe également dans le cadre de l'invention.

Cette figure illustre en outre des supports 12, 13 agencés pour le support, par la pièce à usiner, des branches 2 et respectivement 3.

Par ailleurs deux plaques 11 sont encore représentées, lesquelles sont prévues pour l'isolation du mécanisme de guidage 16, 17, 15 du dispositif contre la pénétration dans celui-ci de poussières ou d'autres impuretés. Les deux plaques d'isolation sont par exemple fixées aux deux côtés de la branche de mesure 2 par collage ou par des broches, comme représenté sur la figure 2. Les rainures de guidage précitées 16, 17 sont par exemple prévues dans les deux plaques précitées 11. Une graduation peut encore être prévue le long des bords respectifs des branches 1, 2, 3, ainsi que le long de l'extrémité arrondie 29 de la branche de mesure 2 et en outre le long de tout le cercle formé par la continuation géométrique de ladite extrémité arrondie 29.

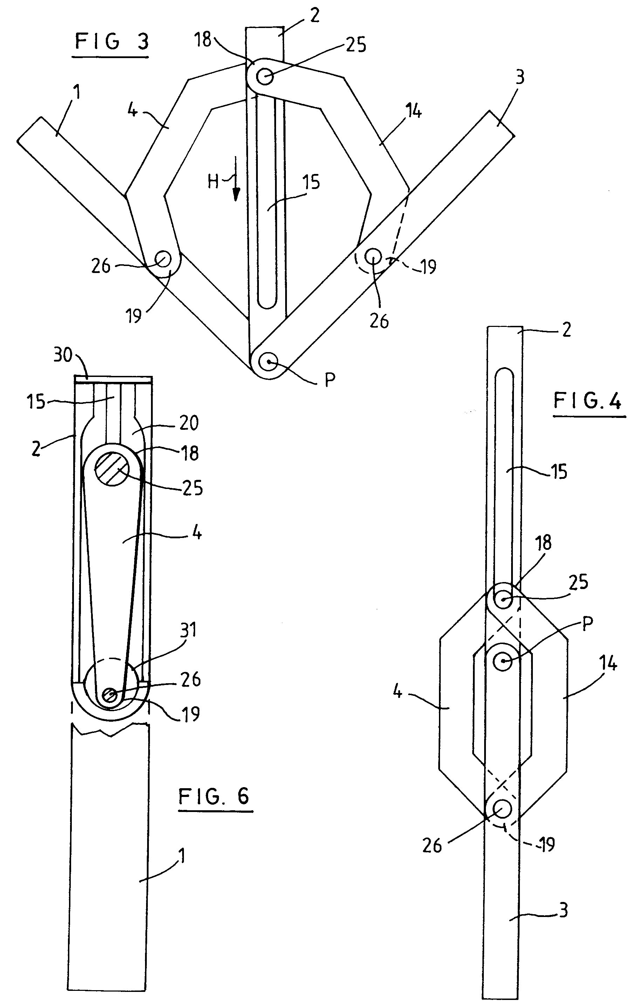

Dans la figure 3, une deuxième forme de réalisation du dispositif ou diviseur d'angle suivant l'invention est représentée dans une position de travail intermédiaire déterminée. Dans cette forme de réalisation, les bras 4, 14 présentent une forme pliée qui est telle que lors de l'ouverture complète du dispositif diviseur d'angle, le point d'articulation P qui est commun aux trois branches 1, 2, 3 est contourné sans gêne ainsi qu'il ressort de la figure 4. Les bras 4, 14 présentent une forme polygonale avec des tronçons linéaires. Une première extrémité 18 de chaque bras 4, 14 peut effectuer un mouvement de va-et-vient suivant la direction de la flèche H dans la rainure de guidage droite 15 entre les deux extrémités de celle-ci, au moyen d'un axe de guidage 25. Ce dernier consiste par exemple en un corps d'axe qui est guidé dans la rainure de guidage 15 par l'intermédiaire d'un papillon ou d'un autre moyen de fixation. La deuxième extrémité opposée 19 de chaque bras 4, 14 est fixée par l'intermédiaire de moyens de fixation 26 dans les branches latérales 1 et 3. Les moyens de liaison 26 sont constitués, par exemple, par un corps hélicoïdal, un axe à pinces, une pièce de serrage et/ou un rivet. L'axe de guidage 25 relie les deux bras 4, 14 s'articulant avec celui-ci à la branche de mesure 2. La deuxième forme de réalisation décrite ci-dessus est particulièrement simple quant à sa construction et néanmoins efficace pour l'indication d'une fraction d'angle.

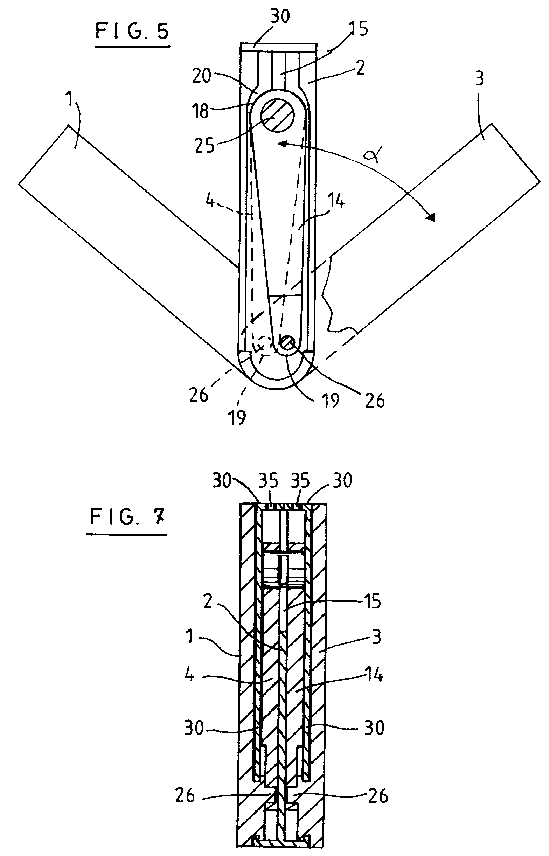

Par ailleurs, une troisième forme de réalisation du dispositif suivant l'invention est décrite dans les figures 5 et 6, chacune dans une position de travail déterminée. Dans cette troisième forme de réalisation, la première rainure de guidage 15 est ouverte à une extrémité ce qui a pour effet que, pour obtenir la rainure, il ne faut pas forer mais on peut travailler à la fraise. Les bras 4, 14 s'étendent sur une partie substantielle de la longueur de la branche de mesure 2 et ils sont donc relativement beaucoup plus grands que les bras de la première forme de réalisation du dispositif décrite ci-dessus. Il en résulte que l'angle mesuré a est encore plus précis. Cette forme de réalisation permet en outre de diviser un angle inclus vers l'extérieur puisque aucune broche d'articulation 24 ne gêne dans cette construction. En effet, dans cette forme de réalisation, la branche de mesure 2 est reliée à chaque branche latérale 1, 3 au moyen d'une plaquette 30, qui est agencée entre chaque branche latérale 1, 3 et la branche de mesure 2. Avantageusement, chaque plaquette 30 présente une forme en L, la portion longue de celle-ci étant agencée, comme mentionné ci-dessus, contre chaque branche latérale 1, 3 et la branche de mesure 2, et la portion courte s'étendant jusque sur l'extrémité libre de la branche de mesure 2 de manière à la couvrir extérieurement, comme représenté sur les figures 5 à 7. Avantageusement, la portion courte précitée de chaque plaquette 30 est pourvue de passages 35 (figure 7) permettant le logement dans ceux-ci d'éléments de liaison, tels des vis, non représentés. Ces éléments de liaison à amener de l'extérieur servent au serrage desdites plaquettes 30 contre la branche de mesure 2. Les plaquettes 30 sont en outre pourvues à l'extrémité libre de leur portion longue d'un évidement par exemple circulaire 31, lequel repose contre la branche de mesure 2, d'où résulte une tension sur l'axe 26 des branches latérales 1, 3.

## Revendications

1. Dispositif pour indiquer une fraction d'angle présentant deux branches latérales (1, 3) et au moins une branche de mesure (2') dans laquelle est prévue au moins une première rainure de guidage (15), les branches précitées (1, 2, 3) étant reliées l'une à l'autre de manière articulée par des premiers moyens de liaison (24), deux bras mobiles (4, 14) étant en outre prévus lesquels sont reliés de manière articulée (R) à une extrémité (18) par des deuxièmes moyens de liaison (25), caractérisé en ce que l'extrémité articulée précitée (18) des deux bras (4, 14) est déplaçable dans la première rainure de guidage (15) et en ce que les bras (4, 14) sont agencés de manière telle que les branches latérales (1, 3) peuvent être complètement rabattues.

2. Dispositif suivant la revendication 1, caractérisé en ce que les bras précités (4, 14) présentent une forme pliée vers l'extérieur par rapport à la branche de mesure (2).

3. Dispositif suivant l'une des revendications 1 et 2, caractérisé en ce qu'au moins une deuxième rainure de guidage (16, 17) est prévue à ladite extrémité articulée (31) de la branche de mesure (2), la deuxième extrémité (19) de chaque bras (4, 14), qui est opposée à ladite extrémité articulée (18), étant déplaçable par des troisièmes moyens de liaison (26).

4. Dispositif suivant l'une quelconque des revendications 1 à 3, caractérisé en ce que chaque deuxième rainure de guidage précitée (16, 17) présente une forme courbée autour du point d'articulation (P).

5. Dispositif suivant la revendication 4, caractérisé en ce que chaque deuxième rainure de guidage précitée (16, 17) est formée pratiquement par une paire de demi-cercles qui sont agencés symétriquement par rapport audit point d'articulation (P) des branches (1, 2, 3).

6. Dispositif suivant la revendication 5, caractérisé en ce que chaque bras (4, 14) présente une courbure pointée vers l'extérieur l'une par rapport à l'autre, laquelle est prévue pour que ladite deuxième extrémité (19) des bras (4, 14) parcoure pratiquement toute la distance entre les deux extrémités des deux deuxièmes rainures de guidage (16, 17) lorsque ladite extrémité articulée (18) des bras (4, 14) parcourt entièrement les deuxièmes rainures de guidage (16, 17).

7. Dispositif suivant l'une quelconque des revendications 1 à 6, caractérisé en ce que ladite première rainure de guidage (15) est formée par une rainure pratiquement droite dont la longueur est au moins telle que les deux extrémités correspondent chacune à un déplacement extrême de la première extrémité précitée des bras (4, 14).

8. Dispositif suivant l'une quelconque des revendications 1 à 7, caractérisé en ce que la première rainure de guidage (15) forme une fente destinée au traçage d'une fraction d'angle mesurée.

9. Dispositif suivant l'une quelconque des revendications 1 à 8, caractérisé en ce qu'il est prévu un évidement (20) dans la branche de mesure (2) pour le déplacement de chaque bras (4, 14) dans celui-ci.

10. Dispositif suivant l'une quelconque des revendications 1 à 9, caractérisé en ce qu'au moins l'une des branches (1, 2, 3) est pourvue d'un support (12, 13).

11. Dispositif suivant l'une quelconque des revendications 1 à 10, caractérisé en ce qu'une plaque (11) est prévue à au moins une face de la branche de mesure (2) pour l'isolation du mécanisme de guidage (16, 17).
